Europäisches Patentamt

European Patent Office

Office européen des brevets

(19)

(11) **EP 1 407 571 B1**

(12) **FASCICULE DE BREVET EUROPEEN**

(45) Date de publication et mention
de la délivrance du brevet:
**07.12.2005 Bulletin 2005/49**

(21) Numéro de dépôt: **02767575.0**

(22) Date de dépôt: **16.07.2002**

(51) Int Cl.⁷: **H04L 1/06**, H04L 27/26

(86) Numéro de dépôt international:
**PCT/FR2002/002538**

(87) Numéro de publication internationale:
**WO 2003/009519 (30.01.2003 Gazette 2003/05)**

(54) **PROCEDE DE RECEPTION D'UN SIGNAL MULTIPORTEUSE A DIVERSITE DE VOIES, RECEPTEUR ET SYSTEME CORRESPONDANT**

VERFAHREN UND SYSTEM ZUM EMPFANG EINES MEHRTRÄGERSIGNALS MIT MEHRWEGEDIVERSITY, UND ENTSPRECHENDER EMPFÄNGER

METHOD FOR DIVERSITY RECEPTION OF A MULTICARRIER SIGNAL, RECEIVER AND CORRESPONDING SYSTEM

(84) Etats contractants désignés:
**AT BE BG CH CY CZ DE DK EE ES FI FR GB GR
IE IT LI LU MC NL PT SE SK TR**

(30) Priorité: **17.07.2001 FR 0109558**

(43) Date de publication de la demande:
**14.04.2004 Bulletin 2004/16**

(73) Titulaire: **TELEDIFFUSION DE FRANCE
75732 Paris Cédex 15 (FR)**

(72) Inventeurs:
• **DEGOULET, Gabriel
F-35000 RENNES (FR)**
• **LAUNAY, Erwan
F-35700 RENNES (FR)**
• **SUEUR, Bertrand
F-35000 RENNES (FR)**

(74) Mandataire: **Vidon, Patrice
Cabinet Vidon
16 B, rue Jouanet - B.P. 90333
Technopole Atalante
35703 Rennes Cedex 7 (FR)**

(56) Documents cités:
**EP-A- 1 045 531          FR-A- 2 768 278
FR-A- 2 786 048**

## EP 1 407 571 B1

**Description**

Le domaine de l'invention est celui de la réception de signaux numériques, dans des récepteurs mettant en oeuvre au moins deux voies de réception distinctes, c'est-à-dire au moins deux voies alimentées par des flux de données distincts mais acheminant (au moins partiellement) les mêmes symboles source.

Ainsi, l'invention s'applique en particulier aux récepteurs mettant en oeuvre la diversité d'antennes, chaque antenne recevant le même signal émis, mais avec des perturbations éventuellement différentes, les canaux de transmission étant distincts. Plus généralement, l'invention s'applique dans tous les cas où deux flux de données distincts portant les mêmes symboles source sont disponibles (que ces flux soient similaires, ou transmis sur des bandes de fréquences et/ou dans des canaux différents, codés et/ou modulés de façons différentes, ...).

Un domaine d'application particulier de l'invention est celui de la diffusion hertzienne de signaux multi-porteuses, notamment de télévision numérique (par exemple selon la norme DVB-T), en particulier à destination de récepteurs mobiles ou portables.

Dans cette situation, on a déjà proposé d'utiliser des techniques de diversité d'antennes. Ces techniques reposent sur la réception simultanée, sur plusieurs antennes, d'un même signal émis. On considère que, comparativement à un récepteur à antenne unique (sans diversité d'antennes), toutes les voies ne subissant pas les mêmes perturbations liées au canal de transmission, on pourra décoder de façon plus satisfaisante le signal obtenu en recombinant les signaux présents sur chaque antenne.

Cette recombinaison est généralement réalisée par « pondération-sommation », c'est à dire en calculant à chaque instant une combinaison linéaire des signaux issus de chaque antenne. Cela peut être réalisé selon plusieurs approches se distinguant par le mode de calcul des pondérations associées.

La technique de combinaison à gain identique (Equal Gain Combining, EGC) somme les signaux en phase, la technique de combinaison par sélection (Selection Combining, SC) sélectionne le signal de plus fort rapport signal à bruit, la technique de combinaison à rapport maximal (Maximum Ratio Combining, MRC) pondère les signaux par le rapport de l'amplitude de leur atténuation et de la puissance du bruit additif que le canal leur fait subir, avant de les sommer en phase.

La technique de combinaison à rapport maximal (MRC) maximise (dans l'hypothèse de signaux subissant une atténuation (liée au canal) et un bruit additif (lié aux premiers étages d'amplification) indépendants) le rapport signal à bruit moyen obtenu après recombinaison et conduit à des résultats supérieurs à ceux des techniques d'EGC et de SC. C'est cette technique que l'on préfère généralement employer.

On trouve ainsi dans la littérature de nombreux exemples de systèmes de transmission employant une diversité d'antennes. Une technique particulière est ainsi décrite dans le document de brevet numéro de publication FR 2 786 048, aux noms des titulaires de la présente demande de brevet. Selon cette technique, le dispositif de réception comprend des moyens de combinaison desdites valeurs estimées de voie en une valeur estimée adaptée, ladite combinaison tenant compte desdites informations de confiance de voie pour pondérer lesdites valeurs estimées de voie.

En moyenne, la diversité d'antennes apporte un gain de rapport signal à bruit, généralement de l'ordre de 5 à 10 dB, en particulier dans des conditions de réception difficiles (réception urbaine, mobile ou portable ...).

Cependant, dans certaines situations, la mise en oeuvre de la recombinaison peut conduire à des résultats de mauvaise qualité. En effet, les symboles délivrés par chaque voie sont affectés d'une confiance, appelée par la suite confiance relative, calculée indépendamment sur chaque voie pour effectuer la démodulation.

Ces confiances relatives peuvent donc être normalisées différemment sur chaque voie de réception. Cette différence de normalisation introduit un biais de calcul lors de la combinaison des données issues des différentes voies de réception, lorsque l'une de ces voies présente des conditions moyennes de réception dégradées (mauvais rapport signal à bruit) par rapport aux autres. Ce phénomène n'est pas rare dans la pratique, et masque les bonnes performances de la diversité d'antennes.

Par ailleurs, les techniques classiques nécessitent une synchronisation indépendante de chaque voie de réception, les voies de réception sont ensuite synchronisées à l'aide de mémoires FIFO. Si le signal est trop mauvais sur une seule voie à un instant donné, l'ensemble du récepteur peut se désynchroniser. Là encore, il apparaît que ce phénomène n'est pas rare en pratique et, dans de telles conditions, le gain apporté par la diversité est masqué par les piètres performances de la synchronisation.

Une autre technique s'appuyant sur la diversité mais ne nécessitant pas de synchronisation parfaite est également présentée dans le document EP 1 045 531. Le principe de cette technique consiste à fournir au moins deux types de diversité (diversité d'antennes, de polarisation, de rayonnement, ou de fréquence), et à choisir le meilleur mode de diversité à un instant donné. On sélectionne ainsi le meilleur mode permettant d'optimiser la réception de voie.

Cependant, un inconvénient de cette technique de l'art antérieur est qu'elle ne tient compte que d'une seule voie de réception à un instant donné.

L'invention a notamment pour objectif de pallier ces inconvénients de l'état de l'art.

Plus précisément, un objectif de l'invention est de fournir une technique de réception d'un signal mettant en oeuvre au moins deux voies de réception qui soient efficaces, voire optimales, même lorsqu'une ou plusieurs voies présentent un mauvais rapport signal à bruit moyen.

Un autre objectif de l'invention est de fournir une telle technique de réception qui soit simple à mettre en oeuvre, et qui ne nécessite pas de traitement complexe, ni dans les chaînes de traitement associées à chacune des voies, ni après recombinaison.

Encore un autre objectif de l'invention est de fournir une telle technique de réception, qui soit adaptée pour une industrialisation aisée, notamment dans le cadre de systèmes mettant également en oeuvre des récepteurs monovoie.

L'invention a également pour objectif de fournir une telle technique de réception, qui permette d'améliorer la synchronisation, les asservissements fréquentiels et temporels, le contrôle automatique du gain...

Ces objectifs, ainsi que d'autres qui apparaîtront par la suite, sont atteints à l'aide d'un procédé de réception d'un signal multiporteuse formé d'une pluralité de fréquences porteuses, mettant en oeuvre au moins deux voies de réception alimentées par des flux de données, chacune desdites voies acheminant les mêmes données source, chacune desdites voies associant à chaque donnée source reçue une valeur estimée de voie et une information de confiance de voie correspondante, pour alimenter des moyens de combinaison suivis de moyens de décodage. Selon l'invention, le procédé met en oeuvre un traitement tenant compte d'au moins une information représentative de la qualité de réception sur chacune desdites voies, pour optimiser au moins une étape de ladite réception.

Ainsi, on tient compte des qualités de réception sur chacune des voies, de façon à privilégier la ou les voies ayant une meilleure qualité de réception et, inversement, réduire l'effet néfaste d'une ou des voies ayant une faible qualité de réception.

Cette approche permet d'optimiser le traitement en délivrant des informations de confiance optimisée, et/ou de générer des asservissements plus efficaces.

Ainsi, selon un premier aspect avantageux de l'invention, on tient compte desdites informations représentatives de la qualité de réception sur chacune desdites voies pour déterminer ladite information de confiance de voie, dite alors confiance absolue.

Dans ce cas, une donnée source étant acheminée par un sous-ensemble dudit ensemble de fréquences porteuses, comprenant au moins une fréquence porteuse, ladite confiance absolue tient compte de façon préférentielle :

- d'une première information de confiance, dite confiance relative, déterminée en fonction de fréquences porteuses de ladite voie ;et
- d'une seconde information de confiance, dite confiance globale, déterminée en fonction de fréquences porteuses d'au moins une autre voie de réception.

Ainsi, selon l'invention, si la qualité de réception sur l'une des voies se dégrade, les données utilisées pour la suite du traitement (décodage de Viterbi par exemple) prendront moins en compte cette voie, et favoriseront les données délivrées par les autres voies. Le résultat final sera de meilleure qualité.

Avantageusement, lesdits sous-ensembles correspondent chacun à une fréquence porteuse dudit signal multiporteuse.

Préférentiellement, pour obtenir la meilleure efficacité, ladite confiance globale est calculée sur une durée de l'ordre d'au moins un symbole.

Le procédé de l'invention s'applique notamment avantageusement dans les récepteurs mettant en oeuvre une diversité d'antennes, chacune desdites voies étant associée à une antenne capable de recevoir un signal multiporteuse émis.

Selon un mode de mise en oeuvre préférentiel de l'invention, ladite information représentative de la qualité tient compte d'une estimation du rapport signal à bruit dans la voie de réception correspondante.

Ladite information représentative de la qualité peut notamment tenir compte d'au moins une des informations suivantes :

- erreur entre les données reçues sur chaque porteuse et leur projection sur le plus proche point d'une constellation de modulation correspondante ;
- information de contrôle automatique de gain (CAG) ;
- analyse d'une séquence d'apprentissage et/ou de fréquences pilotes.

Dans un mode de réalisation particulier, ladite information représentative de la qualité tient ainsi compte de la variance du bruit pour chaque symbole et sur chacune des voies.

Plus généralement, l'information représentative de la qualité sur une voie peut être une estimation du rapport signal à bruit (SNR) de tout type, et par exemple être représentée par l'inverse de la variance du bruit ($1/\Sigma^2$).

Ladite information de confiance absolue peut avantageusement être calculée de la facon suivante :

$$Cfd\_MRC(k,S)= \sum_i \mathrm{Cfd'i} \sum_i 1/\Sigma_i^2(S)$$

où :

Cfd'i est ladite confiance relative associée aux données transportées, par la porteuse k du symbole S dans la voie i ;
$1/\Sigma_i^2$ est une information représentative du rapport signal à bruit pour le symbole S dans la voie i.

Avantageusement, ladite information $\Sigma_i^2$ est une estimation de la variance du bruit pour le symbole S dans la voie i.

Selon un second aspect préférentiel de l'invention, lesdites informations représentatives de la qualité sont utilisées pour optimiser au moins un asservissement de réception.

On peut ainsi synthétiser une commande d'asservissement unique et optimisée, délivrée à toutes les voies.

De façon préférentielle, le ou lesdits asservissements mettent en oeuvre une pondération à l'aide desdites informations représentatives de la qualité.

Selon un mode de mise en oeuvre, lesdites informations représentatives de la qualité sont utilisées pour sélectionner au moins une voie, dite(s) voie(s) de référence, présentant une meilleure qualité de réception globale, selon un critère prédéterminé, à un instant donné. Ce sont alors les asservissements produits par cette ou ces voies (ou définis à partir de cette ou ces voies) qui sont délivrés à l'ensemble des voies.

Selon un autre mode de mise en oeuvre avantageux, ladite information représentative de la qualité est utilisée, dans un module prévu à cet effet, pour élaborer au moins une commande d'asservissement synthétique, distribuée à au moins deux desdites voies.

Cela peut être considéré comme la définition d'une voie de référence (au moins pour la partie asservissement) présentant au moins une caractéristique globale correspondant à une combinaison mathématique de caractéristiques d'au moins deux desdites voies et/ou délivrant au moins une commande globale correspondant à une combinaison mathématique de commandes correspondantes d'au moins deux desdites voies.

Avantageusement, la sélection de ladite voie de référence met en oeuvre un mécanisme d'hystérésis, afin d'éviter des changements incessants.

De façon préférentielle, un desdits asservissements optimisés agit sur une horloge système unique, alimentant chacune desdites voies.

De même, un asservissement optimisé peut avantageusement être mis en oeuvre pour l'asservissement temporel d'au moins une des fonctions appartenant au groupe comprenant les fonctions suivantes :

- fréquence d'horloge ;
- fréquence d'échantillonnage ;
- localisation de symboles ;
- position d'un intervalle de garde ;
- localisation de trames ;
- localisation de supertrames ;
- localisation d'une structure de données particulière ;
- détection d'un top de synchronisation.

Un asservissement optimisé peut également être mis en oeuvre, avantageusement, pour le contrôle de la fréquence des porteuses démodulées (CAF), et/ou pour l'asservissement du gain de réception (CAG).

L'invention concerne également les récepteurs d'un signal multiporteuse mettant en oeuvre le procédé tel que décrit ci-dessus.

Un tel récepteur met en oeuvre un traitement tenant compte d'au moins une information représentative de la qualité de réception sur chacune desdites voies, pour optimiser au moins une opération de ladite réception.

Avantageusement, selon un premier aspect de l'invention, lesdites informations représentatives de la qualité sont prises en compte par des moyens de détermination d'une information de confiance affectée à chacune desdites valeurs estimées de voies.

Préférentiellement, selon un second aspect de l'invention, le récepteur met en oeuvre au moins un asservissement optimisé, tenant compte desdites informations représentatives de la qualité.

Un tel récepteur délivre de façon préférentielle au moins une commande d'asservissement optimisé unique à au moins deux desdites voies.

Selon un mode de réalisation particulier de l'invention, chacune desdites voies est réalisée à l'aide de processeurs de traitement pouvant également être mis en oeuvre dans un récepteur mono voie.

L'invention concerne également les systèmes de transmission ou de diffusion d'au moins un signal multiporteuse formé d'une pluralité de fréquences porteuses, vers au moins un récepteur mettant en oeuvre au moins deux voies de réception. Selon l'invention, au moins un desdits récepteurs met en oeuvre un traitement tenant compte d'au moins une information représentative de la qualité de réception sur chacune desdites voies, pour optimiser au moins une étape de ladite réception.

Selon un mode de réalisation avantageux, un tel système comprend des récepteurs monovoie et des récepteurs à au moins deux voies de réception mettant en oeuvre un même processeur de traitement, prévu pour être utilisé seul dans un récepteur monovoie et dans chacune des voies d'un récepteur à au moins deux voies de réception.

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :

- la figure 1 illustre l'architecture classique d'un récepteur multiporteuse mono-antenne ;
- la figure 2 est un schéma synoptique d'un récepteur à diversité d'antennes (2 voies) selon l'invention ;
- la figure 3 illustre une réalisation modulaire d'un récepteur selon l'invention.

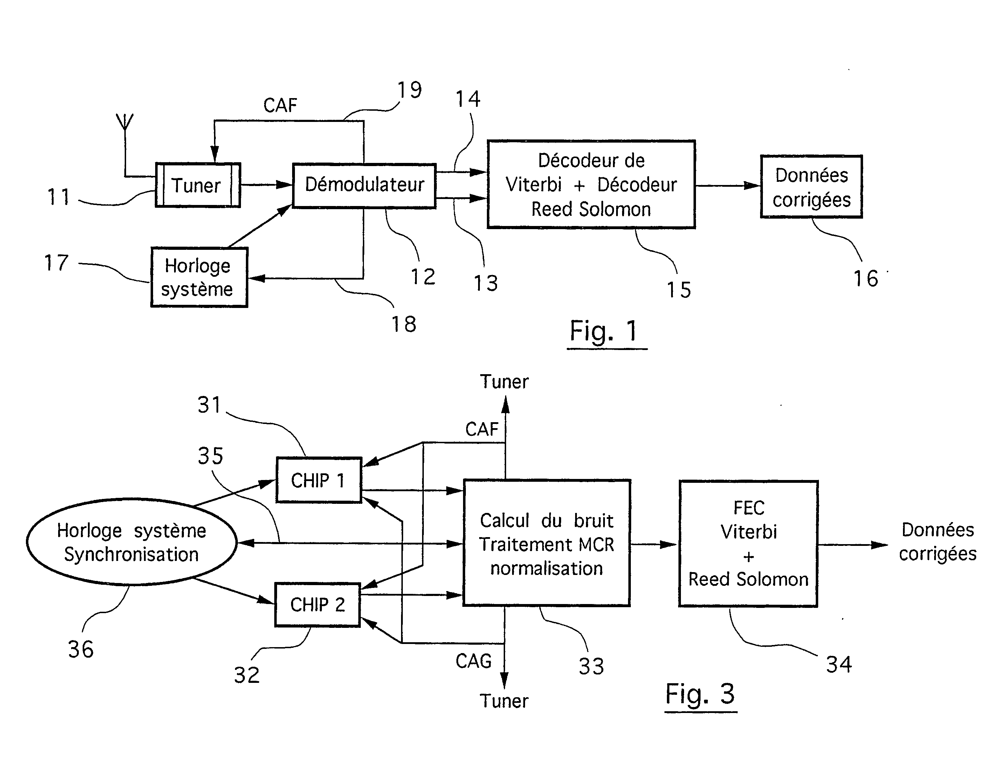

Avant de présenter en détail l'invention, on rappelle tout d'abord l'architecture d'un récepteur multiporteuse (COFDM) monovoie, tel qu'illustré en figure 1.

Le tuner 11 reçoit le signal d'antenne, sélectionne le canal et envoie le signal contenu dans la bande sélectionnée au démodulateur 12. Le démodulateur 12 est composé essentiellement d'une FFT (transformée de Fourier rapide), d'une estimation du canal et d'une égalisation porteuse par porteuse.

L'estimation de canal évalue pour chaque porteuse $k$ de chaque symbole $S$ la fonction de transfert du canal $h(k,S)$ et le bruit moyen $\sigma^2(S)$. L'égalisation consiste classiquement à multiplier, en complexe, les données $y$ par l'inverse de l'estimation du canal h. Ensuite, le démodulateur fournit pour chaque porteuse de chaque symbole les données $x(k,S)=y(k,S)/h(k,S)$ 13 et l'information de confiance associée $Cfd(k,S)=h(k,S)^2/\sigma^2(S)$ 14 au décodeur 15 de Viterbi ou décodeur de canal.

Ce dernier délivre des données corrigées 16, permettant de mettre en oeuvre le décodage source.

Une horloge système 17 pilote le démodulateur 12. Elle est contrôlée par une information d'asservissement 18 délivrée par le démodulateur 12. Ce dernier délivre également une information 19 de contrôle automatique de fréquence (CAF) au tuner 11.

Une première approche de la diversité d'antennes serait de purement et simplement dupliquer l'architecture de la figure 1. Comme discuté plus haut, il ne s'agit pas d'une solution optimale. Il est cependant souhaitable de maximiser les ressemblances entre un récepteur monovoie et une voie d'un récepteur multivoie, pour des raisons de coût de revient et de production évidentes.

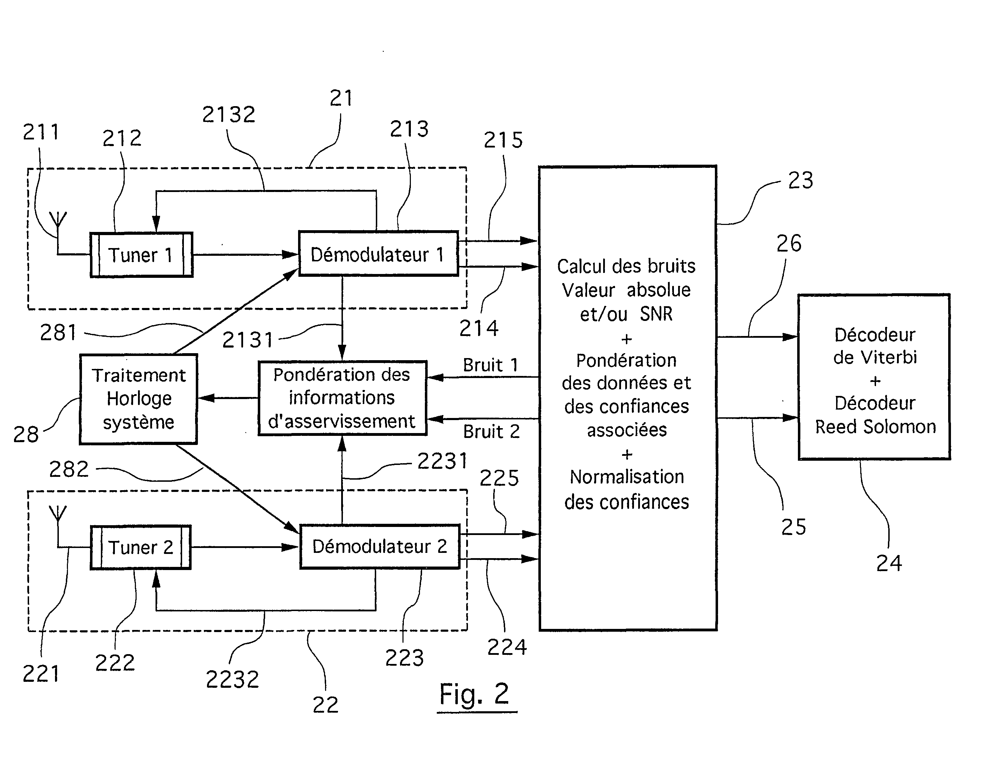

Un récepteur selon l'invention est illustré en figure 2. Selon l'invention, on tient compte du rapport signal à bruit sur chacune des voies de réception afin, notamment :

- de "sur-pondérer" les confiances attribuées aux données reçues sur chaque porteuse de chacune des voies (confiance attribuée à chaque porteuse d'un symbole relativement à l'ensemble des porteuses du dit symbole) de façon que, si la qualité de réception se dégrade sur l'une des voies, les données utilisées pour l'étape suivante de décodage de Viterbi tiennent principalement compte des données les moins bruitées.
- synthétiser ou générer une synchronisation du récepteur optimisée, tenant compte de l'ensemble des voies, pondérées en fonction du bruit. La commande peut être sélective ou relever d'une pondération. Dans le cas où la commande est sélective cette approche peut s'assimiler à la définition, en termes d'asservissement, d'une voie maître et de voies esclaves, la nature de chaque voie (maître ou esclave) pouvant évoluer dans le temps. Dans le cas d'une pondération, cette approche peut s'assimiler à la définition d'une voie de référence, a priori plus efficace.
- de commander tout asservissement nécessaire à la réception en diversité, tels que :

  - Asservissements fréquentiels : contrôle de la fréquence des porteuses démodulées (Contrôle Automatique de Fréquence) ;
  - Asservissements des gains de réception (pour chaque voie) : Contrôle Automatique de Gain ;
  - Asservissements temporels : fréquence d'horloge, d'échantillonnage, localisation des symboles, position de l'intervalle de garde, localisation des trames, supertrames et autres structures de données, tops divers de synchronisation pour le traitement des données reçues, en fonction de cette même stratégie.

La figure 2 est un schéma synoptique d'un récepteur à diversité d'antennes amélioré, selon l'invention. Seules deux, voies 21 et 22 sont illustrées, associées respectivement aux antennes 211 et 221. Bien entendu, il est possible de généraliser le principe à plus de deux voies, cet exemple étant volontairement simplifié pour faciliter la compréhension de l'invention.

Chaque voie 21 et 22 comprend un tuner 212 et 222, alimenté respectivement par une antenne 211 et 221, puis un démodulateur 213 et 223, qui délivrent des données démodulées 214 et 224, accompagnées d'une information de confiance 215 et 225.

Un module de traitement 23 reçoit ces différents éléments, pour fournir à un décodeur 24 de Viterbi, associé à un décodeur de Reed-Solomon (ou des moyens de décodage prévus pour effectuer des opérations similaires) des données « globales » 25, affectées chacune d'une confiance « globale » 26. Par « globale », on entend ici « tenant compte d'au moins deux voies », par comparaison aux données et confiance « de voie ».

Ce module de traitement 23 effectue notamment les opérations suivantes :

- calcul des bruits, en valeur absolue ;
- pondération des données et des confiances associées ;
- normalisation des confiances.

Ces aspects sont présentés plus en détail par la suite.

En fonction des informations de bruit 26, et des informations d'asservissement 2131 et 2231 délivrées par les démodulateurs 213 et 223, un module 27 de pondération des informations d'asservissement contrôle un module 28 unique de traitement de l'horloge système, qui contrôle (281, 282) l'ensemble des démodulateurs 213 et 223.

Dans l'exemple illustré, les informations de CAF 2132 et 2232 sont déterminées par chacun des démodulateurs. Selon une autre approche, elles peuvent êtres déterminées de façon centralisée, par le module 23. De la même façon, celui-ci peut déterminer toute information qu'il est intéressant de distribuer de façon homogène (par exemple la synchronisation) entre les différentes voies et/ou susceptibles d'être améliorée par la prise en compte des informations présentes sur chaque voie.

Le récepteur à diversité d'antennes utilise avantageusement les briques de base de l'architecture d'un récepteur mono-antenne (figure 1) avec les modifications décrites ci-après :

Soit :

- Cfd1(k,S) et Cfd2(k,S) confiances associées respectivement aux données transportées par les porteuses k du symbole S sur les voies de réception 21 et 22.
- x1(k,S) et x2(k,S) les données utiles transportées par les porteuses k du symbole S sur les voies de réception 1 et 2.

Le processeur 23 calcule pour chaque porteuse de chaque symbole une seule valeur combinée x_MRC(k, S) des données et une seule confiance Cfd_MRC(k,S) ensuite décodées par un décodeur de Viterbi.

Les valeurs optimales de x_MRC(k,S) et Cfd_MRC(k,S) sont :

$$Cfd\_MRC(k,S) = Cfd1(k,S) + Cfd2(k,S)$$

$$x\_MRC(k,S) = [Cfd1(k,S) \times x1(k,S) + Cfd2(k,S) \times x2(k,S)] / Cfd\_MRC(k,S)$$

Le décodage des données est ensuite réalisé normalement en sortie du décodage de Viterbi 24 (décodage en bloc, décodage MPEG2)

Un procédé doit être mis en oeuvre pour synchroniser (28) la réception sur les deux voies et permettre ainsi la combinaison des données associées à une même porteuses d'un même symbole. Selon l'art antérieur, ce sont généralement des FIFOs, synchronisées sur les tops symboles des circuits de décodage DVB-T utilisés sur chaque voie (par crainte d'un grand délai de propagation entre les deux antennes de réception).

Selon l'invention, on calcule le bruit en valeur absolue pour la pondération du traitement MRC et normalisation des confiances associées :

Soit : $\Sigma^2 1(S)$ et $\Sigma^2 2(S)$ le résultat du calcul de la variance du bruit réalisées pour le symbole S sur les voies 1 et 2 (respectivement). Ce calcul est réalisé préférentiellement à partir des seules données reçues sur chaque voies et éventuellement des informations de CAG disponibles (pour permettre une réalisation modulaire du récepteur et conforme aux normes de diffusion hertzienne numérique actuelles).

Le calcul précédent devient, selon l'invention :

$$Cfd'1(k,S) = Cfd1(k,S)/\Sigma^2 1(S) \ \& \ Cfd'2(k,S) = Cfd2(k,S)/\Sigma^2 1(S)$$

$$Cfd\_MRC(k,S) = [Cfd'1(k,S) + Cfd'2(k,S)] / [1/\Sigma^2 1(S) + 1/\Sigma^2 2(S)]$$

$$x\_MRC(k,S) = [Cfd'1(k,S) \times x1(k,S) + Cfd'2(k,S) \times x2(k,S)] / Cfd\_MRC(k,S)$$

Cette approche permet une gestion souple et adaptative d'une synchronisation maître-esclave, la voie maître pouvant être obtenue par sélection d'une des voies, avec un mécanisme d'hystérésis pour éviter de trop nombreux changements, ou synthétique, c'est-à-dire fournie à partir d'une pondération d'au moins certaines voies.

Plus précisément, la fonction maître-esclave peut-être mise en oeuvre selon une approche classique, une sélection de l'une des voies, ou mettre en oeuvre la génération de commandes d'asservissement composites. Par exemple, si une commande est envoyée vers un oscillateur commandé en tension (VCXO) pour réaliser une synchronisation temporelle fine, on peut envisager d'envoyer au VCXO (alors unique pour les deux voies) une commande égale à la combinaison linéaire des commandes générées sur chaque voie pondéré par la valeur de surpondération...

L'évolution peut ainsi porter sur la sélection de la ou des voies à prendre en compte et/ou sur la combinaison (proportions) des voies prises en compte pour définir la voie maître, qu'elle soit réelle ou virtuelle.

Les deux voies sont asservies sur la même horloge (VCXO). Le calcul d'une estimation du rapport signal à bruit en valeur absolue de chaque démodulateur (par exemple le calcul des variances du bruit : $\Sigma^2 1(S)$ et $\Sigma^2 2(S)$) est utilisé pour pondérer les informations d'asservissement (synchronisation temporelle et éventuellement fréquentielle) calculées sur chaque voie de réception. Les informations d'asservissement sont des valeurs numériques calculées dans la boucle d'asservissement de chaque démodulateur.

La prise en compte des informations d'asservissement de chaque démodulateur se fait avantageusement sous la forme d'un calcul de la moyenne pondérée (individuellement par le bruit lié à chaque démodulateur) des commandes d'asservissement calculées sur chaque voie.

Les valeurs $\Sigma^2 1(S)$ et $\Sigma^2 2(S)$ peuvent notamment être calculées par calcul de l'écart quadratique moyen entre les données utiles x1(k,S) et x2(k,S) et leur projection sur les constellations de modulation attendues (en effet le processeur réalisant l'opération de MRC a toujours accès à ces données alors que la disponibilité des commandes CAG n'est pas garantie).

On pourra réaliser un tel récepteur à diversité amélioré de façon "modulaire" en utilisant des circuits intégrés conçus pour la réception mono-antenne mais disposant des entrées sorties nécessaire à un processeur externe, comme illustré par la figure 3.

Chaque voie comprend donc un processeur 31, 32 de réception et de démodulation, qui alimente un module unique 33, réalisé par exemple sous la forme d'un composant programmable, qui effectue le calcul du bruit, le traitement MRC et la normalisation. Il alimente un module FEC (Forward Error Correction) 34 de décodage de Viterbi et Reed-Solomon. Ce composant 33 est donc un composant spécifique au fonctionnement multi-voie. Il effectue également, bien sûr, toutes les opérations décrites plus haut (gestion de la voie de référence, détermination d'une voie synthétique, de l'horloge unique, des asservissements,...).

Les composants 31 et 32 sont quant à eux les mêmes que ceux utilisés dans un récepteur monovoie. Ils comprennent en outre les entrées/sorties nécessaires à la mise en oeuvre d'une diversité d'antennes, et en particulier une sortie 35 de pilotage de l'horloge système de synchronisation 36.

La fonction de décodage de Viterbi pourra être réalisée en interne dans un des deux processeurs 31, 32 si les entrées requises sont disponibles.

L"invention propose ainsi une mise en oeuvre efficace, voire optimale, au sein d'un récepteur (en particulier COFDM) d'un procédé de réception à diversité d'antennes, mettant notamment en oeuvre les aspects suivants :

- Une estimation du rapport signal à bruit est réalisée par un processeur réalisant l'opération de combinaison des signaux reçus sur les différentes voies. Celle-ci pourra être réalisée, par exemple à partir des seules informations de confiance et de données reçues sur chaque voie, en calculant l'erreur quadratique moyenne entre les données reçues et leur projection sur le plus proche point de la constellation initialement transmise, ou plus simplement à partir des informations de CAG fournies à chaque tuner, ou a partir de ces deux informations. L'utilisation de séquences d'apprentissage ou de pilotes peut aussi être prévue.
- Un ensemble de commande d'asservissement est mis en oeuvre. Cela peut être réalisé facilement à partir de l'information de rapport signal bruit estimée par le processeur réalisant l'opération de combinaison des signaux reçus et évoquée précédemment : On peut par exemple pondérer, à l'aide de cette information de rapport signal à bruit, les commandes d'asservissement calculées sur chaque voie de réception avant de les envoyer vers les organes à asservir.

Pour cela, on met en oeuvre notamment :

- un calcul d'une valeur absolue du rapport signal à bruit sur chaque voie, jouant le rôle de "sur-confiance" attribuée à chaque voie de réception ;
- l'utilisation de cette "sur-confiance" mise à jour périodiquement pour la combinaison des données reçues sur les différentes voies, afin d'optimiser la réception des données et la synchronisation du récepteur ;

L'invention permet ainsi de s'affranchir (ou au moins d'en réduire sensiblement la taille) des mémoires FIFO usuellement employées pour la remise en phase des données avant combinaisons de celles-ci (après l'étage de démodulation de chaque voie), et d'obtenir une efficacité optimisée.

**Revendications**

1. Procédé de réception d'un signal multiporteuse formé d'une pluralité de fréquences porteuses, mettant en oeuvre au moins deux voies de réception (21, 22) parallèles alimentées chacune par ledit signal multiporteuse, et délivrant chacune une estimation des données source portées par ledit signal multiporteuse,
   chacune desdites voies associant à chaque donnée source reçue une valeur estimée de ladite donnée source et une information de confiance correspondante, dite confiance absolue et représentative d'un niveau de confiance de l'estimation de ladite valeur estimée, pour alimenter des moyens de combinaison (23) suivis de moyens de décodage (24),
   **caractérisé en ce que** ladite confiance absolue, tient compte d'une part d'une information de confiance globale, représentative de la qualité de réception sur ladite voie (21, 22), par rapport à au moins une autre voie (21, 22), et d'autre part d'une information de confiance relative, représentative de la qualité de réception de la donnée source concernée dans ladite voie (21, 22), par rapport à au moins une autre donnée source reçue sur la même voie (21, 22).

2. Procédé selon la revendication 1, **caractérisé en ce que**, une donnée source étant acheminée par un sous-ensemble dudit ensemble de fréquences porteuses, comprenant au moins une fréquence porteuse :

   - ladite confiance relative est déterminée en fonction de fréquences porteuses de ladite voie (21, 22) ; et
   - ladite confiance globale est déterminée en fonction de fréquences porteuses d'au moins une autre voie de réception (21, 22).

3. Procédé de réception selon l'une quelconque des revendications 1 et 2, **caractérisé en ce que** ladite confiance globale est calculée sur une durée de l'ordre d'au moins un symbole.

4. Procédé de réception selon l'une quelconque des revendications 1 à 3, **caractérisé en ce qu'**il met en oeuvre une diversité d'antennes, chacune desdites voies (21, 22) étant associée à une antenne (211, 221) capable de recevoir un signal multiporteuse émis.

5. Procédé de réception selon l'une quelconque des revendications 2 à 4, **caractérisé en ce que** lesdits sous-ensembles correspondent chacun à une fréquence porteuse dudit signal multiporteuse.

6. Procédé de réception selon l'une quelconque des revendications 1 à 5, **caractérisé en ce que** ladite confiance absolue tient compte d'une estimation du rapport signal à bruit dans la voie de réception (21, 22) correspondante.

7. Procédé de réception selon l'une quelconque des revendications 1 à 6, **caractérisé en ce que** ladite confiance absolue tient compte d'au moins une des informations suivantes :

   - erreur entre les données reçues sur chaque porteuse et leur projection sur le plus proche point d'une constellation de modulation correspondante ;
   - information de contrôle automatique de gain;
   - analyse d'une séquence d'apprentissage et/ou de fréquences pilotes.

8. Procédé de réception selon la revendication 7, **caractérisé en ce que** ladite confiance absolue tient compte de la variance du bruit pour chaque symbole et sur chacune des voies (21, 22).

9. Procédé de réception selon l'une quelconque des revendications 1 à 8, **caractérisé en ce que** ladite information de confiance absolue est calculée de la façon suivante :

$$Cfd\_MRC(k,S) = \sum_i Cfd'_i(k,S) / \sum_i 1/\Sigma_i^2(S)$$

où :

Cfd'i est ladite confiance relative associée aux données transportées par la porteuse k du symbole S dans la voie i ;
$1/\Sigma_i^2$ est une information représentative du rapport signal à bruit pour le symbole S dans la voie i.

10. Procédé de réception selon la revendication 9, **caractérisé en ce que** ladite information $\Sigma_i^2$ est une estimation de la variance du bruit pour le symbole S dans la voie i.

11. Procédé de réception selon l'une quelconque des revendications 1 à 10, **caractérisé en ce que** lesdites confiances absolues sont utilisées pour optimiser au moins un asservissement de réception.

12. Procédé de réception selon la revendication 11, **caractérisé en ce que** le ou lesdits asservissements mettent en oeuvre une pondération (27) à l'aide desdites informations représentatives de la qualité.

13. Procédé de réception selon l'une quelconque des revendications 1 à 12, **caractérisé en ce que** lesdites confiances absolues sont utilisées pour sélectionner au moins une voie (21, 22), dite(s) voie(s) de référence, présentant une meilleure qualité de réception globale, selon un critère prédéterminé, à un instant donné.

14. Procédé de réception selon l'une quelconque des revendications 1 à 12, **caractérisé en ce que** ladite confiance absolue est utilisée pour élaborer au moins une commande d'asservissement synthétique, distribuée à au moins deux desdites voies (21, 22).

15. Procédé de réception selon la revendication 14, **caractérisé en ce qu'**on définit une voie de référence présentant au moins une caractéristique globale correspondant à une combinaison mathématique de caractéristiques d'au moins deux desdites voies (21, 22) et/ou délivrant au moins une commande globale correspondant à une combinaison mathématique de commandes correspondantes d'au moins deux desdites voies.

16. Procédé de réception selon l'une quelconque des revendications 11 à 15, **caractérisé en ce qu'**un desdits asservissements optimisés agit sur une horloge système unique, alimentant chacune desdites voies (21, 22).

17. Procédé de réception selon l'une quelconque des revendications 11 à 16, **caractérisé en ce qu'**un asservissement optimisé est mis en oeuvre pour l'asservissement temporel d'au moins une des fonctions appartenant au groupe comprenant les fonctions suivantes :

- fréquence d'horloge ;
- fréquence d'échantillonnage ;
- localisation de symboles ;
- position d'un intervalle de garde ;
- localisation de trames ;
- localisation de supertrames ;
- localisation d'une structure de données particulière ;
- détection d'un top de synchronisation.

18. Procédé de réception selon l'une quelconque des revendications 11 à 17, **caractérisé en ce qu'**un asservissement optimisé est mis en oeuvre pour le contrôle de la fréquence des porteuses démodulées.

19. Procédé de réception selon l'une quelconque des revendications 11 à 18, **caractérisé en ce qu'**un asservissement optimisé est mis en oeuvre pour l'asservissement du gain de réception.

20. Procédé de réception selon la revendication 19, **caractérisé en ce que** la sélection de ladite voie de référence met en oeuvre un mécanisme d'hystérésis.

21. Récepteur d'un signal multiporteuse, formé d'une pluralité de fréquences porteuses, comprenant au moins deux voies de réception (21, 22) parallèles alimentées chacune par ledit signal multiporteuse, et délivrant chacune une estimation des données source portées par ledit signal multiporteuse,
chacune desdites voies (21, 22) comprenant des moyens de traitement associant à chaque donnée source reçue une valeur estimée de ladite donnée source et une information de confiance correspondante, dite confiance absolue et représentative d'un niveau de confiance de l'estimation de ladite valeur estimée, pour alimenter des moyens de combinaison (23) suivis de moyens de décodage (24),
**caractérisé en ce que** ladite confiance absolue, tient compte d'une part d'une information de confiance globale, représentative de la qualité de réception sur ladite voie (21, 22), par rapport à au moins une autre voie (21, 22), et d'autre part d'une information de confiance relative, représentative de la qualité de réception de la donnée source concernée dans ladite voie (21, 22), par rapport à au moins une autre donnée source reçue sur la même voie (21, 22).

22. Récepteur d'un signal multiporteuse selon la revendication 21, **caractérisé en ce qu'**il comprend des moyens d'asservissement optimisé, tenant compte desdites confiances absolues.

23. Récepteur d'un signal multiporteuse selon la revendication 22, **caractérisé en ce qu'**il délivre au moins une commande d'asservissement optimisé unique à au moins deux desdites voies (21, 22).

24. Récepteur d'un signal multiporteuse selon l'une quelconque des revendications 21 à 23, **caractérisé en ce que** chacune desdites voies (21, 22) est réalisée à l'aide de processeurs de traitement pouvant également être mis en oeuvre dans un récepteur monovoie.

25. Système de transmission ou de diffusion d'au moins un signal multiporteuse formé d'une pluralité de fréquences porteuses, vers au moins un récepteur comprenant au moins deux voies de réception (21, 22) parallèles alimentées chacune par ledit signal multiporteuse, et délivrant chacune une estimation des données source portées par ledit signal multiporteuse,
chacune desdites voies (21, 22) comprenant des moyens de traitement associant à chaque donnée source reçue une valeur estimée de ladite donnée source et une information de confiance de voie correspondante, dite confiance absolue et représentative d'un niveau de confiance de l'estimation de ladite valeur estimée, pour alimenter des moyens de combinaison (23) suivis de moyens de décodage (24),
**caractérisé en ce que**, dans au moins un desdits récepteurs, ladite confiance absolue, tient compte d'une part d'une information de confiance globale, représentative de la qualité de réception sur ladite voie (21, 22), par rapport à au moins une autre voie (21, 22), et d'autre part d'une information de confiance relative, représentative de la qualité de réception de la donnée source concernée dans ladite voie (21, 22), par rapport à au moins une autre donnée source reçue sur la même voie (21, 22).

26. Système de transmission ou de diffusion selon la revendication 25, **caractérisé en ce qu'**il comprend des récepteurs monovoie et des récepteurs à au moins deux voies de réception mettant en oeuvre un même processeur de traitement, prévu pour être utilisé seul dans un récepteur monovoie et dans chacune des voies d'un récepteur à au moins deux voies de réception.

**Patentansprüche**

1. Verfahren zum Empfang eines Mehrfachträgersignals, das aus einer Vielzahl von Trägerfrequenzen gebildet wird, die mindestens zwei parallele Empfangspfade (21, 22) einsetzen, welche jeweils von dem erwähnten Mehrfachträgersignal versorgt werden und jeweils eine Schätzung der vom Mehrfachträgersignal getragenen Quellendaten liefern,
wobei jedes dieser Pfade einem jeden empfangenen Quellenwert einen geschätzten Wert dieses Quellenwertes und eine entsprechende Vertrauensinformation zuordnen, die absolutes Vertrauen genannt wird und für ein Vertrauensniveau der Schätzung dieses geschätzten Wertes repräsentativ ist, um Kombinationsmittel (23) zu versorgen, die von Decodiermitteln (24) gefolgt werden,
**dadurch gekennzeichnet, dass** das erwähnte absolute Vertrauen einerseits eine globale Vertrauensinformation berücksichtigt, die für die Empfangsqualität auf dem Pfad (21, 22) in Verhältnis zur Empfangsqualität auf mindestens einem anderen Pfad (21, 22) repräsentativ ist und andererseits eine relative Vertrauensinformation berücksichtigt, die für die Empfangsqualität des in dem erwähnten Pfad (21, 22) betroffenen Quellenwertes, in Verhältnis zu mindestens einem anderen über denselben Pfad (21, 22) empfangenen Quellenwert, repräsentativ ist.

2. Verfahren nach Anspruch 1, **dadurch gekennzeichnet, dass**, wenn ein Quellenwert durch eine mindestens eine Trägerfrequenz umfassende Untermenge aus der erwähnten Menge an Trägerfrequenzen herbeigeführt wird, folgendes gilt:

- das relative Vertrauen wird als Funktion von Trägerfrequenzen des Pfades (21, 22) bestimmt und,
- das globale Vertrauen wird als Funktion von Trägerfrequenzen von mindestens einem anderen Empfangspfad (21, 22) bestimmt.

3. Empfangsverfahren nach einem der Ansprüche 1 oder 2, **dadurch gekennzeichnet, dass** das globale Vertrauen über eine Zeitdauer in der Größenordnung von mindestens einem Symbol berechnet wird.

4. Empfangsverfahren nach einem der Ansprüche 1 bis 3, **dadurch gekennzeichnet, dass** es eine Vielzahl von Antennen einsetzt, wobei jeder der Pfade (21, 22) einer Antenne (211, 221) zugeordnet ist, die ein gesendetes Mehrfachträgersignal empfangen kann.

5. Empfangsverfahren nach einem der Ansprüche 2 bis 4, **dadurch gekennzeichnet, dass** die erwähnten Untermengen jeweils einer Trägerfrequenz des Mehrfachträgersignals entsprechen.

6. Empfangsverfahren nach einem der Ansprüche 1 bis 5, **dadurch gekennzeichnet, dass** das Absolutvertrauen eine Schätzung des Signal/Rausch-Verhältnisses im entsprechenden Empfangspfad (21, 22) berücksichtigt.

7. Empfangsverfahren nach einem der Ansprüche 1 bis 6, **dadurch gekennzeichnet, dass** das Absolutvertrauen mindestens eine der folgenden Informationen berücksichtigt:

- Fehler zwischen den auf jeder Trägerfrequenz empfangenen Daten und ihrer Projektion auf den nächsten Punkt eines entsprechenden Modulierungs-Zustandsdiagramms;
- Information bezüglich der automatischen Gewinnkontrolle;
- Analyse einer Lemfolge und/oder von Pilotfrequenzen.

8. Empfangsverfahren nach Anspruch 7, **dadurch gekennzeichnet, dass** das Absolutvertrauen die Rauschvarianz für jedes Symbol und auf jedem der Pfade (21, 22) berücksichtigt.

9. Empfangsverfahren nach einem der Ansprüche 1 bis 8, **dadurch gekennzeichnet, dass** die Absolutvertrauens-Information folgendermaßen berechnet wird:

$$Cfd\_MRC(k, S) = \sum_i Cfd'_i(k,S) / \sum_i 1 / \Sigma_i^2(S)$$

wobei:

$Cfd'_i$ das den von der Trägerfrequenz k des Symbols S über den Pfad i beförderten Daten zugeordnete Relativvertrauen ist;
$1/\Sigma_i^2$ eine für das Rausch/Signal-Verhältnis für das Symbol S im Pfad i repräsentative Information ist.

10. Empfangsverfahren nach Anspruch 9, **dadurch gekennzeichnet, dass** die Information $\Sigma_i^2$ eine Schätzung der Rauschvarianz für das Symbol S im Pfad i ist.

11. Empfangsverfahren nach einem der Ansprüche 1 bis 10, **dadurch gekennzeichnet, dass** die erwähnten Absolutvertrauen zum Optimieren von mindestens einer dem Empfang untergeordneten Regelung verwendet werden.

12. Empfangsverfahren nach Anspruch 11, **dadurch gekennzeichnet, dass** die untergeordnete Regelung bzw. die untergeordneten Regelungen eine Wichtung (27) mit Hilfe der erwähnten, für die Qualität repräsentativen Informationen, einsetzen.

**13.** Empfangsverfahren nach einem der Ansprüche 1 bis 12, **dadurch gekennzeichnet, dass** die erwähnten Absolutvertrauen zum Wählen von mindestens einem des (der) Referenzpfad(e) genannten Pfades (Pfade) (21, 22) verwendet werden, die eine bessere gesamte Empfangsqualität aufweisen, nach einem vorgegebenen Kriterium und zu einem gegebenen Zeitpunkt.

**14.** Empfangsverfahren nach einem der Ansprüche 1 bis 12, **dadurch gekennzeichnet, dass** das erwähnte Absolutvertrauen zum Herstellen von mindesten einem synthetischen Unterordnungsbefehl genutzt wird, der an mindestens zwei der Pfade (21, 22) verteilt wird.

**15.** Empfangsverfahren nach Anspruch 14, **dadurch gekennzeichnet, dass** ein Referenzpfad definiert wird, der mindestens eine globale Eigenschaft aufweist, die einer mathematischen Kombination der Eigenschaften von mindestens zwei der Pfade (21, 22) entspricht und/oder mindestens einen Globalbefehl liefert, der einer mathematischen Kombination von entsprechenden Befehlen aus mindestens zwei der erwähnten Pfade entspricht.

**16.** Empfangsverfahren nach einem der Ansprüche 11 bis 15, **dadurch gekennzeichnet, dass** eine der optimierten untergeordneten Regelungen auf einen Einzelsystem-Taktgeber wirkt, der jeden der besagten Pfade (21, 22) versorgt.

**17.** Empfangsverfahren nach einem der Ansprüche 11 bis 16, **dadurch gekennzeichnet, dass** eine optimierte untergeordnete Regelung für die zeitliche untergeordnete Regelung von mindestens einer der Funktionen eingesetzt wird, die der folgenden Gruppe angehören:

- Taktgeberfrequenzen;
- Abtastfrequenzen;
- Lokalisierung von Symbolen;
- Position eines Schutzintervalls;
- Lokalisierung von Rahmen;
- Lokalisierung von Überrahmen;
- Lokalisierung einer besonderen Datenstruktur;
- Erfassung eines Synchronisierungszeichens.

**18.** Empfangsverfahren nach einem der Ansprüche 11 bis 17, **dadurch gekennzeichnet, dass** eine optimierte untergeordnete Regelung für die Kontrolle der Frequenz der demodulierten Trägerfrequenzen eingesetzt wird.

**19.** Empfangsverfahren nach einem der Ansprüche 11 bis 18, **dadurch gekennzeichnet, dass** eine optimierte untergeordnete Regelung für die untergeordnete Regelung des Empfangsgewinns eingesetzt wird.

**20.** Empfangsverfahren nach Anspruch 19, **dadurch gekennzeichnet, dass** die Wahl des erwähnten Referenzpfades einen Hysteresemechanismus einsetzt.

**21.** Empfänger eines Mehrfachträgersignals, das aus einer Vielzahl von Trägerfrequenzen gebildet wird und mindestens zwei parallele Empfangspfade (21, 22) umfasst, die jeweils von dem erwähnten Mehrfachträgersignal versorgt werden und die jeweils eine Schätzung der von dem Mehrfachträgersignal getragenen Quellendaten liefern, wobei jeder dieser Pfade (21, 22) über Verarbeitungsmittel verfügt, die einem jeden empfangenen Quellenwert einen geschätzten Wert dieses Quellenwertes und eine entsprechende, Absolutvertrauen genannte Vertrauensinformation zuordnen, die repräsentativ ist für ein Vertrauensniveau der Schätzung des erwähnten geschätzten Wertes, zum Versorgen von Kombinationsmitteln (23), die von Decodiermitteln (24) gefolgt sind,
**dadurch gekennzeichnet, dass** das erwähnte Absolutvertrauen einerseits eine globale Vertrauensinformation berücksichtigt, die repräsentativ ist für die Empfangsqualität über dem Pfad (21, 22) im Verhältnis zu mindestens einem anderen Pfad (21, 22) und anderseits eine relative Vertrauensinformation berücksichtigt, die für die Empfangsqualität des im Pfade (21, 22) betroffenen Quellenwertes repräsentativ ist, im Verhältnis zu mindestens einem über denselben Pfad (21, 22) empfangenen Quellenwert.

**22.** Empfänger für ein Mehrfachträgersignal nach Anspruch 21, **dadurch gekennzeichnet, dass** er optimierte Unterordnungsmittel umfasst, welche die erwähnten Absolutvertrauen berücksichtigen.

**23.** Empfänger für ein Mehrfachträgersignal nach Anspruch 22, **dadurch gekennzeichnet, dass** er mindestens einen optimierten Unterordnungsbefehl liefert, der für mindestens die zwei Pfade (21, 22) einzigartig ist.

**24.** Empfänger eines Mehrfachträgersignals nach einem der Ansprüche 21 bis 23, **dadurch gekennzeichnet, dass** jeder der erwähnten Pfade (21, 22) mit Hilfe von Verarbeitungsprozessoren realisiert wird, die ebenfalls in einem Einzelpfadempfänger einsetzbar sind.

**25.** Sende- oder Übertragungssystem von mindestens einem aus einer Mehrzahl von Trägerfrequenzen gebildeten Mehrfachträgersignal zu mindestens einem Empfänger, der mindestens zwei parallele Empfangspfade (21, 22) umfasst, die jeweils von dem Mehrfachträgersignal versorgt werden und jeweils eine Schätzung der von dem erwähnten Mehrfachträgersignal getragenen Quellendaten liefern, wobei jeder der Pfade (21, 22) über Verarbeitungsmittel verfügt, die einem jeden empfangenen Quellenwert einen geschätzten Wert des Quellenwertes und eine entsprechende Pfad-Vertrauensinformation liefert, die Absolutvertrauen genannt wird und für ein Vertrauensniveau der Schätzung des erwähnten Schätzwertes repräsentativ ist, um Kombinationsmittel (23) zu versorgen, die von Decodiermitteln (24) gefolgt werden, **dadurch gekennzeichnet, das** in mindestens einem der Empfänger das besagte Absolutvertrauen einerseits eine globale Vertrauensinformation berücksichtigt, die für die Empfangsqualität auf dem Pfad (21, 22) im Verhältnis zur Empfangsqualität auf mindestens einem anderen Pfad (21, 22) repräsentativ ist und andererseits eine relative Vertrauensinformation berücksichtigt, die für die Empfangsqualität des betroffenen Quellenwertes im besagten Pfad (21, 22) repräsentativ ist, im Verhältnis zu mindestens einem anderen, über denselben Pfad (21, 22) empfangenen Quellenwert.

**26.** Sende- oder Übertragungssystem nach Anspruch 25, **dadurch gekennzeichnet, dass** es Einzelpfad Empfänger sowie Empfänger mit mindestens zwei Empfangspfaden umfasst, die einen selben Verarbeitungsprozessor einsetzen, der vorgesehen ist, um alleine in einem Einzelpfadempfänger und in jedem Pfad eines Empfängers mit mindestens zwei Empfangspfaden verwendet zu werden.

**Claims**

**1.** Method for receiving a multicarrier signal formed by a plurality of carrier frequencies, using at least two parallel reception channels (21, 22), each supplied by said multicarrier signal, and each delivering an estimate of the source data carried by said multicarrier signal, each of the channels associating each received source data element with an estimated value of the said source data element and a corresponding confidence information element, called the absolute confidence, and representing a confidence level of the estimation of said estimated value, to supply combination means (23) followed by decoding means (24), wherein the said absolute confidence takes into account, on the one hand, a global confidence information element, representing the reception quality in said channel (21, 22) with respect to at least one other channel (21, 22), and, on the other hand, a relative confidence information element, representing the reception quality of the source data element concerned in the said channel (21, 22) with respect to at least one other source data element received in the same channel (21, 22).

**2.** Method according to Claim 1, wherein, a source data element being routed by a subset of said plurality of carrier frequencies comprising at least one carrier frequency,

- said relative confidence is determined as a function of carrier frequencies of said channel (21, 22), and

- said global confidence is determined as a function of carrier frequencies of at least one other reception channel (21, 22).

**3.** Reception method according to either one of Claims 1 and 2, wherein the said global confidence is calculated over a period of the order of at least one symbol.

**4.** Reception method according to any one of Claims 1 to 3, wherein it uses a diversity of antennas, each of said channels (21, 22) being associated with one antenna (211, 221) capable of receiving a transmitted multicarrier signal.

**5.** Reception method according to any one of Claims 2 to 4, wherein each of said subsets corresponds to one carrier frequency of the said multicarrier signal.

**6.** Reception method according to any one of Claims 1 to 5, wherein said absolute confidence takes into account an estimate of the signal to noise ratio in the corresponding reception channel (21, 22).

7. Reception method according to any one of Claims 1 to 6, wherein said absolute confidence takes into account at least one of the following information elements:

   - error between the data received on each carrier and their projection on to the nearest point of a corresponding modulation constellation;

   - automatic gain control information;

   - analysis of a learning sequence and/or of pilot frequencies.

8. Reception method according to Claim 7, wherein said absolute confidence takes into account the variance of the noise for each symbol and in each of the channels (21, 22).

9. Reception method according to any one of Claims 1 to 8, wherein said absolute confidence information element is calculated as follows:

$$Cfd\_MRC(k,S) = \sum_i Cfd'i(k,S) / \sum_i 1 / \Sigma_i^2(S)$$

   where

   Cfd'i   is the relative confidence associated with the data carried by the carrier k of the symbol S in the channel i;

   $1/\Sigma_i^2$   is an information element representing the signal to noise ratio for the symbol S in the channel i.

10. Reception method according to Claim 9, wherein said information element $\Sigma_i^2$ is an estimate of the variance of the noise for the symbol S in the channel i.

11. Reception method according to any one of Claims 1 to 10, wherein said absolute confidences are used to optimize at least one reception feedback system.

12. Reception method according to Claim 11, wherein said feedback system or systems apply a weighting (27) with the aid of said information representing the quality.

13. Reception method according to any one of Claims 1 to 12, wherein said absolute confidences are used to select at least one channel (21, 22), called reference channel(s), having a better global reception quality, according to a predetermined criterion, at a given instant.

14. Reception method according to any one of Claims 1 to 12, wherein said absolute confidence is used to generate at least one synthetic feedback command, distributed to at least two of said channels (21, 22).

15. Reception method according to Claim 14, wherein a reference channel is defined, the reference channel having at least one global characteristic corresponding to a mathematical combination of characteristics of at least two of said channels (21, 22) and/or delivering at least one global command corresponding to a mathematical combination of corresponding commands of at least two of said channels.

16. Reception method according to any one of Claims 11 to 15, wherein one of the said optimized feedback systems acts on a unique system clock supplying each of said channels (21, 22).

17. Reception method according to any one of Claims 11 to 16, wherein an optimized feedback system is used for the temporal control of at least one of the functions belonging to the group comprising the following functions:

   - clock frequency;

   - sampling frequency;

- symbol location;

- guard interval setting;

- location of frames;

- location of superframes;

- location of a particular data structure;

- detection of a synchronization cue.

18. Reception method according to any one of Claims 11 to 17, wherein an optimized feedback system is used to control the frequency of the demodulated carriers.

19. Reception method according to any one of Claims 11 to 18, wherein an optimized feedback system is used for the gain feedback system at reception.

20. Reception method according to Claim 19, wherein the selection of said reference channel uses a hysteresis mechanism.

21. Receiver of a multicarrier signal formed by a plurality of carrier frequencies, comprising at least two parallel reception channels (21, 22), each supplied by said multicarrier signal, and each delivering an estimate of the source data carried by said multicarrier signal, each of the channels (21, 22) comprising processing means associating each received source data element with an estimated value of the said source data element and a corresponding confidence information element, called the absolute confidence, and representing a confidence level of the estimation of said estimated value, to supply combination means (23) followed by decoding means (24), wherein said absolute confidence takes into account, on the one hand, a global confidence information element, representing the reception quality in said channel (21, 22) with respect to at least one other channel (21, 22), and, on the other hand, a relative confidence information element, representing the reception quality of the source data element concerned in the said channel (21, 22) with respect to at least one other source data element received in the same channel (21, 22).

22. Multicarrier signal receiver according to Claim 21, wherein it comprises optimized feedback means taking said absolute confidences into account.

23. Multicarrier signal receiver according to Claim 22, wherein it delivers at least one optimized feedback command which is unique to at least two of said channels (21, 22).

24. Multicarrier signal receiver according to any one of Claims 21 to 23, wherein each of said channels (21, 22) is implemented with the aid of processors which can also be used in a single-channel receiver.

25. System for transmitting or broadcasting at least one multicarrier signal, formed by a plurality of carrier frequencies, towards at least one receiver comprising at least two parallel reception channels (21, 22), each supplied by said multicarrier signal, and each delivering an estimate of the source data carried by said multicarrier signal, each of the channels (21, 22) comprising processing means associating each received source data element with an estimated value of said source data element and a corresponding channel confidence information element, called the absolute confidence, and representing a confidence level of the estimation of said estimated value, to supply combination means (23) followed by decoding means (24), wherein, in at least one of said receivers, said absolute confidence takes into account, on the one hand, a global confidence information element, representing the reception quality in said channel (21, 22) with respect to at least one other channel (21, 22), and, on the other hand, a relative confidence information element, representing the reception quality of the source data element concerned in the channel (21, 22) with respect to at least one other source data element received in the same channel (21, 22).

26. Transmission or broadcasting system according to Claim 25, wherein it comprises single-channel receivers and receivers having at least two reception channels each, using the same processor, designed to be used only in a single-channel receiver and in each of the channels of a receiver having at least two reception channels.

EP 1 407 571 B1

CAF

11 — Tuner → Démodulateur → Décodeur de Viterbi + Décodeur Reed Solomon → Données corrigées

19   14   15   16

17 — Horloge système

12   13   18

**Fig. 1**

Tuner

CAF

31

35

Horloge système Synchronisation

CHIP 1 → Calcul du bruit Traitement MCR normalisation → FEC Viterbi + Reed Solomon → Données corrigées

CHIP 2

36   32   33   34

CAG

Tuner

**Fig. 3**

Fig. 2